(19) Europäisches Patentamt / European Patent Office / Office européen des brevets

(11) **EP 2 164 922 B1**

(12) **FASCICULE DE BREVET EUROPEEN**

(45) Date de publication et mention
de la délivrance du brevet:
**07.09.2011 Bulletin 2011/36**

(21) Numéro de dépôt: **08774785.3**

(22) Date de dépôt: **04.07.2008**

(51) Int Cl.:
*C09K 8/80* *(2006.01)*      *C08K 3/34* *(2006.01)*
*C08K 3/36* *(2006.01)*      *C08K 3/40* *(2006.01)*
*C08J 5/00* *(2006.01)*      *C08J 5/04* *(2006.01)*

(86) Numéro de dépôt international:
**PCT/EP2008/058707**

(87) Numéro de publication internationale:
**WO 2009/007325 (15.01.2009 Gazette 2009/03)**

(54) **MATERIAU COMPOSITE DE FAIBLE DENSITE**

VERBUNDSTOFF MIT GERINGER DICHTE

LOW-DENSITY COMPOSITE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.07.2007 FR 0704916**

(43) Date de publication de la demande:
**24.03.2010 Bulletin 2010/12**

(73) Titulaire: **Rhodia Opérations**
**93306 Aubervilliers (FR)**

(72) Inventeurs:
• ORANGE, Gilles
**F-95230 Soisy Sous Montmorency (FR)**
• **ESTUR, Jean-François**
**F-69230 Saint Genis Laval (FR)**
• **TUPINIER, Didier**
**F-38150 Assieu (FR)**

(74) Mandataire: **Valentino, Cédric et al**
**RHODIA SERVICES**
**Direction de la Propriété Industrielle**
**C.R.T.L., BP 62**
**85, rue des Frères Perret**
**69192 Saint-Fons (FR)**

(56) Documents cités:
**WO-A-00/05302        WO-A-2006/072704**
**US-A- 3 659 651        US-A1- 2005 272 611**
**US-A1- 2005 284 631**

**Description**

La présente invention concerne un matériau composite de faible densité et de haute ténacité à base de polymère thermoplastique, en particulier présentant des performances mécaniques élevées à haute température, notamment à la compression. L'invention concerne aussi un procédé de préparation dudit matériau, ainsi que ses utilisations, notamment dans le domaine de la récupération de boues, liquides et gaz présents dans des réservoirs souterrains, et en particulier dans le domaine de l'extraction d'hydrocarbures, tels que le pétrole brut ou le gaz naturel.

Dans de très nombreux domaines d'activité, il peut s'avérer nécessaire de pouvoir disposer de matériaux présentant des performances mécaniques élevées, caractérisées notamment par une très bonne résistance à la compression et une faible déformation à la compression, non seulement à température ambiante, mais aussi à des températures élevées.

Selon les domaines d'application, des solutions ont été apportées et sont utilisées aujourd'hui. Toutefois certaines solutions techniques nécessitent encore d'être améliorées, car elles ne répondent que partiellement ou imparfaitement aux besoins requis. Notamment la densité de ces matériaux est généralement élevée en raison de l'utilisation de fortes quantités de charge.

Ceci est par exemple le cas dans le domaine de la récupération de boues, liquides et gaz présents dans des réservoirs souterrains, et en particulier dans le domaine de l'extraction d'hydrocarbures, tels que le pétrole brut ou le gaz naturel, et plus particulièrement pour les techniques de fracturation des puits de forage.

La fracturation des puits est une méthode qui est utilisée aujourd'hui lorsque l'on souhaite accroître les taux d'extraction des boues, liquides et gaz présents dans les réservoirs naturels souterrains. Cette technique permet, grâce aux fissures (fractures) créées dans la roche souterraine d'avoir accès à une plus grande quantité des produits d'intérêt à extraire.

Divers systèmes sont utilisés pour maintenir un écoulement des divers boues, liquides et gaz, notamment hydrocarbures, lors de la fracturation (formulations en présence de tensioactifs, gel et divers polymères, particules solides, et autres). Le procédé de fracturation implique deux étapes successives : i) injection d'un fluide avec un débit et une pression suffisante pour provoquer la rupture de la formation géologique créant ainsi des fissures (fractures) au niveau du réservoir (roche), et ii) mise en place de matériaux, généralement sous forme de particules, utilisés pour leur capacité d'étayage ou de soutènement desdites fissures (« proppant » en langue anglaise), dans la formation géologique au niveau des fractures.

Lorsque la pression du fluide est relâchée, les contraintes présentes au niveau de la formation géologique tendent à refermer les fractures. Les particules doivent alors présenter une tenue mécanique suffisante pour supporter ces contraintes de fracture (« fracture closer stress » en langue anglaise) et ainsi maintenir une certaine ouverture au niveau de ces fractures et donc une certaine conductivité de la formation géologique. Ainsi traitées, les fractures présentent une perméabilité suffisante permettant l'écoulement des produits d'intérêt, telles que boues, liquides, gaz, notamment hydrocarbures, et leur récupération.

Une difficulté est le placement de ces particules dans les zones fracturées ; ce placement se fait par le fluide de fracturation. Les particules doivent être compatibles avec le fluide : bonne dispersion, et pas de décantation. La compatibilité avec le fluide nécessite des produits présentant une densité proche dudit fluide, c'est-à-dire proche de 1,2.

Parmi les matériaux dits « proppants » les plus couramment utilisés, on peut citer le sable calibré dont la taille des particules se situe typiquement entre environ 1 mm à environ 3 mm, avec une distribution de taille relativement faible (faible dispersité), et de densité voisine de 2,8 à température ambiante. On peut également citer les céramiques sous forme de billes plus ou moins denses.

L'intérêt de ces produits est leur très haute rigidité et résistance mécanique, y compris à haute température. Toutefois ce type de produits présente une faible ténacité, ce qui entraîne la formation de fines lors de l'utilisation, notamment en fracturation, selon un processus d'écaillage (rupture) sous l'effet de la pression appliquée. Ces fines peuvent ainsi colmater la porosité créée au niveau des fractures, ce qui diminue fortement la conductivité de la fracture et donc réduit la circulation des produits à extraire, en particulier les hydrocarbures, plus particulièrement, le pétrole brut. De part leur haute rigidité, ces particules peuvent également s'encastrer dans la formation géologique et ainsi disparaître du plan de fracture.

Un autre inconvénient de ces produits est leur densité élevée. La mise en place de ces proppants est généralement effectuée par pompage/injection via une saumure de densité environ 1,2 : il est donc nécessaire d'ajouter des agents de formulation (tensioactifs, épaississants, gels, et autres ...) pour mettre en place ces particules et éviter les problèmes de démixtion ou décantation, agents de formulation qu'il est nécessaire d'éliminer par la suite.

D'autres matériaux récemment développés et commercialisés depuis peu en tant que proppants sont des particules polymères ou composites, notamment des billes de résine thermodure ou encore des particules de faible densité recouvertes de polymère. Ces matériaux présentent une densité faible, généralement comprise entre environ 0,9 et environ 2, à température ambiante. Cette caractéristique de faible densité leur confère une excellente compatibilité avec les procédés de pompage/fracturation, sans avoir recours à d'autres additifs. Toutefois, ces matériaux souffrent d'inconvénients, notamment leur coût de fabrication sensiblement élevé (en raison des procédés de préparation), et la limitation de leur résistance mécanique notamment à haute température et sous haute pression de confinement.

Le document WO 2006/072704 décrit l'utilisation de silice précipitée pour augmenter le module de flexion de matériaux thermoplastiques tout en maintenant ou améliorant la résistance aux chocs. Les matériaux ainsi obtenus sont utilisés par exemple pour la fabrication de revêtements, de pièces mécaniques ou pour l'automobile.

Le document US-A-3 659 651 décrit un matériau comprenant une matrice polymère thermoplastique (par exemple le nylon) dans laquelle est dispersée une charge de renfort, cette charge de renfort étant choisie parmi les matériaux de renfort conventionnels incluant la silice. Le matériau est utilisé dans les techniques de fracturation de puits de forage, sous forme de particules calibrées.

La présente invention a ainsi pour objectif de proposer un matériau présentant une faible densité et de bonnes propriétés mécaniques, notamment à la compression, à température élevée, en particulier un matériau susceptible de résister à l'écrasement dans les fractures formées lors de fracturations de puits d'extraction des boues, liquides et/ou gaz, notamment de puits de forage d'hydrocarbures, pétrole brut ou gaz naturel.

Plus particulièrement, la présente invention a pour objectif de palier les divers inconvénients des matériaux disponibles aujourd'hui, notamment les inconvénients des proppants utilisés dans les fracturations de puits d'extraction de matériaux fossiles présents dans des réservoirs souterrains.

La présente invention a pour autre objectif de proposer un matériau présentant de bonnes propriétés mécaniques, notamment à la compression, à température élevée, ainsi que de bonnes propriétés de conduction hydraulique.

D'autres objectifs encore apparaîtront au cours de la description de l'invention qui suit.

La demanderesse a maintenant découvert que les objectifs précités sont atteints en totalité ou en partie, grâce au matériau de l'invention.

La présente invention concerne ainsi l'utilisation d'un matériau comprenant au moins une matrice polymère thermoplastique dans laquelle est dispersée au moins une charge de renfort de type silice précipitée, pour le domaine de l'extraction d'hydrocarbures, tels que le pétrole brut ou le gaz naturel.

La présente invention concerne également l'utilisation de charges de renfort de type silice précipitée pour accroitre les propriétés mécaniques d'une matrice polymère thermoplastique pour la réalisation d'un matériau utilisé pour le domaine de l'extraction d'hydrocarbures, tels que le pétrole brut ou le gaz naturel.

Ce matériau est notamment utilisé comme proppant dans les techniques de fracturation des puits de forage, pour sa capacité d'étayage ou de soutènement des fissures obtenue lors des fracturations des puits. Le matériau de l'invention peut également être utilisé en tant que filtre (« gravel pack » en langue anglaise) utilisé dans le domaine de l'extraction d'hydrocarbures.

Ce matériau présente notamment les caractéristiques suivantes : une éprouvette parallélépipédique de section 3,5 mm x 3,5 mm de section et de 4 mm de hauteur, obtenue par injection dudit matériau, et placée sous contrainte d'écrasement avec une force de 0,9 kN répartie sur la totalité de la surface de 3,5 mm x 3,5 mm de ladite éprouvette :

- présente une déformation $\varepsilon_{0,9}$ à 110°C inférieure ou égale à 40%, de préférence inférieure à 35%, de préférence encore inférieure à 30%, avantageusement inférieure à 25% ; et
- un seuil d'écoulement $\sigma_y$ à 110°C supérieur à 6 MPa, de préférence supérieur à 8 MPa, avantageusement supérieur à 10 MPa.

Comme indiqué plus loin, la matrice polymère peut être de plus consolidée par un agent pouvant modifier son comportement visco-élastique éventuellement jusqu'à sa réticulation. Le matériau de la présente invention est en outre notamment caractérisé par une densité inférieure ou égale à 2,5, de préférence inférieure ou égale à 2,2, avantageusement inférieure ou égale à 2, idéalement inférieure ou égale à 1,5, encore plus préférentiellement inférieure ou égale à 1,35.

Ainsi, le matériau de l'invention qui comprend au moins une matrice polymère thermoplastique et d'un renfort sous forme de charges dispersées, présente une haute tenue à l'écrasement à des températures supérieures à 50°C et sous des pressions dépassant 125 bars, avec une densité inférieure à 2,5.

Le polymère thermoplastique utilisé comme matrice du matériau de l'invention peut être tout polymère thermoplastique connu, ou tout mélange de deux ou plusieurs polymères thermoplastiques connus, et peut être par exemple choisi parmi les polyamides, les polyesters, les polyoléfines, et autres. La masse molaire Mn du polymère thermoplastique est généralement supérieure à 10 000, de préférence supérieure à 12 000, de préférence encore supérieure à 15 000.

Le polymère thermoplastique utilisé dans le matériau de l'invention est avantageusement choisis parmi les polyamides, parmi lesquels on peut citer les polyamides et copolyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturé aromatique ou aliphatique, les polyamides obtenus par condensation d'un lactame, d'un amino-acide ou les polyamides obtenus par condensation d'un mélange de ces différents monomères.

Plus précisément, ces copolyamides peuvent être, par exemple, le polyadipamide d'haxeméthylène, les polyphtalamides obtenus à partir d'acide téréphtalique et/ou isophtalique, les copolyamides obtenus à partir d'acide adipique, d'hexaméthylène diamine et de caprolactame.

Selon un mode de réalisation de l'invention, le polymère thermoplastique est avantageusement un polyamide, généralement issu d'une synthèse par polycondensation, par exemple choisi parmi les polyamides 6, polyamides 6.6, polyamides 11, polyamides 12, copolyamides 66/6, copolyamides 6/66, copolyamides comprenant au moins 80% en poids de motifs polyamide 6, ou au moins 80% en poids de copolyamide 66, polyamides semi-aromatiques, tels que ceux connus sous les dénominations commerciales Amodel® ou Nylon HTN, polyamides T6 et polyamides 4,6.

Selon un mode de réalisation préférée de l'invention, la matrice polymère thermoplastique comprend un polyamide, avantageusement un polyamide 6.6, seul ou en mélange avec un ou plusieurs autre(s) polymère(s) thermoplastique(s).

Outre la matrice thermoplastique, le matériau selon la présente invention comprend au moins une charge de renfort de type silice précipitée.

Une silice précipitée est une silice amorphe qui peut être préparée par réaction de précipitation d'un silicate, tel qu'un silicate de métal alcalin comme le silicate de sodium par exemple, avec un agent acidifiant comme l'acide sulfurique, avec obtention d'une suspension de silice précipitée, puis, habituellement, séparation, en particulier par filtration, avec obtention d'un gâteau de filtration, de la silice précipitée obtenue et enfin séchage généralement par atomisation. Le mode de la préparation de la silice précipitée peut être quelconque, notamment, addition d'agent acidifiant sur un pied de cuve de silicate, addition simultanée totale ou partielle d'agent acidifiant et de silicate sur un pied de cuve d'eau et de silicate. On peut notamment citer les procédés mentionnés dans les références EP0520862, EP0670813, EP0670814, et EP0966207. De préférence, on utilise une silice précipitée hautement dispersible (HDS).

La silice précipitée se présente avantageusement sous forme de billes sensiblement sphériques ayant notam-ment une granulométrie moyenne ($D_{50}$) supérieure ou égale à 50 $\mu$m, préférentiellement comprise entre 50 et 300 $\mu$m. La silice précipitée peut se présenter sous forme de granulés, en général de forme sensiblement parallélépipédique, en particulier de taille d'au moins 1 mm. La silice peut aussi se présenter sous forme de poudre, généralement de granulométrie moyenne (D50) supérieure à 10 $\mu$m.

Dans la matrice thermoplastique, la silice précipitée se disperse généralement et l'on retrouve majoritairement, c'est-à-dire au moins 70 % en volume, par rapport au volume total de silice précipitée, de particules submicroniques dispersées de granulométrie moyenne ($D_{50}$) notamment comprise entre 10 et 1000 nm, plus préférentiellement entre 50 et 250 nm.

Le matériau peut éventuellement comprendre d'autres charges de renfort telles que :

- les oxydes, tels que verre, alumine, et autres ;
- les oxydes mixtes, par exemple kaolin, talc, mica, wollastonite, diatomées, et autres ;
- les silicates, tels que argiles, ciments, et autres ;
- les carbonates, par exemple de calcium, de potassium, et autres ;
- les nitrures, par exemple nitrure de silicium, et autres ;
- les carbures, tels que carbure de silicium, et autres ; et parmi
- le carbone, les céramiques, les cendres, volantes, artificielles ou naturelles et autres.

Ces charges peuvent présenter diverses morphologies, par exemple isotrope, plaquettaire ou aciculaire. Les charges peuvent donc se présenter :

- sous forme de fibres, par exemple fibres de verre, d'aramide, de poly(alcool vinylique ;
- de fibres en matériau thermodurcissable, telles que fibres naturelles ou artificielles par exemple fibres de jute ;
- sous forme de billes creuses ou pleines, par exemple tamis moléculaires, céramique, verre, et autres ;
- sous forme de poudre, en particulier pour les argiles, kaolin, talc, silice, aluminium, tamis moléculaires, écorces de fruits et de végétaux en général, noyaux ou pépins de fruits, par exemple coques de noix de noix de cajou, écorce de noix de coco, et autres.

Les charges peuvent également être formées par modification ou réaction *in situ,* après incorporation dans le polymère de charges réactives et/ou de précurseurs. Par exemple, on peut incorporer dans le polymère des charges type silicate ou aluminate de calcium qui donneront lieu *in situ,* par réaction avec de l'eau, à un réseau spécifique d'hydrates de nature, taille et morphologie différentes des silicates initialement introduits.

La granulométrie moyenne ($D_{50}$) de ces charges est généralement comprise entre environ 1 $\mu$m et environ 100 $\mu$m, avantageusement entre environ 1 $\mu$m et environ 50 $\mu$m. Des charges sub-microniques de granulométrie moyenne comprise entre environ 10 nm et environ 1 $\mu$m, voire nanométriques peuvent également être utilisées, seules ou en complément des autres charges, par exemple argiles exfoliées. Selon le type d'application et les propriétés recherchées, il peut également être avantageux d'utiliser des charges renforçantes type polymères, tel que l'acétate de cellulose, seules ou en associations avec une ou plusieurs autres charges telles qu'elles viennent d'être définies.

Comme indiqué plus haut, il est possible d'utiliser des combinaisons de ces différentes charges ou natures d'éléments renforts dans la matrice polymère thermoplastique du matériau selon l'invention.

Avec les charges de renfort, le matériau selon la présente invention peut éventuellement comprendre un ou plusieurs agents de couplage susceptibles d'assurer une certaine cohésion entre la charge et la matrice. Ces agents de couplage sont bien connus de l'homme du métier et peuvent par exemple être choisis parmi les silanes, les esters d'acides gras, les acides carboxyliques, et autres. On peut citer comme type de silane, l'aminopropyltriéthoxysilane, le chloropropyltriéthoxysilane et le chloropropyltriméthoxysilane. On peut notamment utiliser de 0,5 à 20 % en poids d'agent de couplage, par rapport au poids de la silice précipitée, préférentiellement de 2 à 15 % en poids.

Le matériau selon la présente invention peut également comprendre au moins un additif susceptible de modifier certaines propriétés, notamment pour améliorer les étapes de mise en oeuvre et/ou de mise en forme, pour améliorer la stabilité thermique, pour améliorer la stabilité à l'oxydation, pour améliorer la stabilité à la lumière, pour modifier le caractère hydrophile, et autres. Ces additifs sont généralement les additifs usuellement utilisés pour la fabrication de compositions polymères thermoplastiques et parmi lesquels on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les anti-oxydants, les antistatiques, les colorants, les matifiants, les additifs d'aide au moulage ou autres additifs conventionnels. Les additifs utilisables dans le matériau de l'invention peuvent ainsi être choisis avantageusement parmi les plastifiants, les pigments, les colorants, les matifiants, les ignifugeants, les agents de réticulation, les stabilisants thermiques, et autres.

Des additifs pour améliorer la qualité des interfaces charge-matrice, en particulier fibre-matrice, peuvent également être utilisés. Ces additifs sont soit incorporés au polymère, soit présents sur les charges utilisées pour le renfort, ou bien être déposés spécialement sur ces charges, par revêtement, enrobage, pelliculage, entre autres.

La quantité de silice précipitée présente dans ledit matériau peut être comprise entre 1 % et 25%, de préférence entre 2% et 15%, idéalement entre 2% et 12% volumique.

La quantité de charges présentes dans le matériau de l'invention peut varier dans de larges proportions et selon l'utilisation souhaitée. Cette quantité peut être comprise entre 20% et 90% volumique, de préférence entre 20% et 60% volumique, notamment pour des charges de granulométrie moyenne comprise entre environ 1 $\mu$m et environ 100 $\mu$m.

Pour les charges de granulométrie sub-micronique, en particulier pour des charges à morphologie structurée et de granulométrie moyenne comprise entre environ 10 nm et environ 1 $\mu$m, la quantité de charges peut avantageusement être comprise entre 1 % et 25% volumique, de préférence entre 2% et 20% volumique, de préférence entre 2% et 15% volumique, idéalement entre 2% et 12% volumique, tous les pourcentages étant exprimés en volume de charges par volume de matériau. Ce qui correspond approximativement à des proportions en poids comprises entre 2% et 39,6% en poids, de préférence entre 3,8% et 32,9% en poids, de préférence entre 3,8% et 25,7% en poids, idéalement entre 3,8% et 21,1 % en poids, tous ces pourcentages étant exprimés en poids de charges par poids de matériau.

Le matériau de la présente invention peut être préparé selon les techniques usuelles de la mise en oeuvre des polymères thermoplastiques, habituellement par mélange, à l'état fondu ou non, de la matrice polymère thermoplastique, avec les charges, notamment la silice précipitée, et éventuellement les additifs, et autres composants du matériau. Le matériau de la présente invention peut également être préparé par mélange des charges directement dans le milieu de polymérisation de la matrice, notamment lorsque lesdites charges ne sont pas susceptibles d'être dégradées au cours de la polymérisation et qu'elles sont inertes vis-à-vis du procédé de polymérisation.

L'invention concerne notamment un procédé de préparation du matériau dans lequel on mélange au moins un polymère thermoplastique, à l'état fondu ou non, avec une silice précipitée, et éventuellement d'autres charges et des additifs ; ladite silice précipitée se présente avantageusement sous forme de billes sensiblement sphériques ayant une granulométrie moyenne ($D_{50}$) préférentiellement comprise entre 50 et 300 $\mu$m.

Dans chacune des variantes du procédé de préparation du matériau, le mélange des charges avec la matrice ou le milieu de polymérisation sera suffisant pour obtenir un bon état de dispersion des charges au sein de la matrice, en particulier, et notamment dans le cas où les charges pourraient se présenter sous forme d'agglomérats, le mélange devra assurer une désagglomération et une bonne dispersion des charges. Il pourra être utile par exemple de réaliser d'abord un mélange maître à haute teneur en charge, typiquement de 20% à 35% volumique ; le mélange maître est ensuite dilué et formulé de façon à obtenir le mélange souhaité.

Le matériau ainsi obtenu permet de réaliser des pièces selon tout procédé connu de l'homme du métier, notamment par granulation, calandrage, injection, moulage, moulage par injection, pressage, et autres.

On peut ainsi préparer par exemple des granulés, des copeaux, des billes, des lingots, de toutes formes sphériques, aplaties, ovoïdes, en forme de goutte, de prisme, de parallélépipède, de cylindres, de coussinets, et autres. Selon un mode de réalisation, et avantageusement pour des applications en fracturation de puits de forage, le matériau de l'invention est avantageusement sous forme de granulés, de billes et/ou de cylindres, aplatis ou non.

En particulier, lorsque le matériau est sous forme de billes substantiellement sphériques ou ellipsoïdales, ces dernières peuvent être préparées par un procédé de coupe en tête noyée, tel que par exemple décrit dans les brevets US2918701 et US3749539 ou encore dans la demande de brevet US2005/0035483. Ce procédé met en oeuvre une tête de filière munie de trous et alimentée par la matrice thermoplastique, à l'état fondu, comprenant les charges et éventuellement un ou plusieurs des additifs tels que décrits précédemment. La tête de filière immergée est munie d'un porte-couteaux rotatif dont les lames viennent couper la matière fondu issue des trous de filière, le bain d'eau dans lequel est immergée la tête de coupe permettant un refroidissement rapide des billes formées.

Le matériau de la présente invention tel qu'il vient d'être défini se caractérise par sa résistance (tenue) à l'écrasement, et sa faible déformation sous contrainte, à haute température. Ledit matériau se caractérise en outre, dans un mode de réalisation de l'invention, par sa densité, généralement inférieure ou égale à 2,5, mesuré selon la méthode décrite ci-après.

Les mesures et préparations sont effectuées dans un laboratoire à température contrôlée (23°C). Les pesées sont réalisées sur une balance dont la sensibilité est de 0,0001 gramme (Type Sarthorius CP 3245). Une fiole jaugée de 20 mL remplie d'eau déminéralisée est pesée (M0). Au moins 20 granulés pris au hasard sont pesés (M1) puis introduits dans la fiole jaugée dont le niveau est ajusté à 20 mL par élimination d'eau après élimination des bulles éventuelles. La fiole jaugée est alors pesée (M2) La densité des granulés est obtenue par la formule :

$$\text{Densité} = M1 \, / \, [M1 - (M2 - M0)].$$

Les tests de résistance à la compression en température des objets habituellement mis en oeuvre pour les applications puits de pétrole consistent par exemple à mesurer la perméabilité et la conductivité d'un fluide au travers d'un lit de poudre compacté, par exemple selon la norme API RP61. Ce test nécessite le recours à une installation complexe, et de plus la durée de ce test est longue, généralement supérieure à deux semaines.

Aussi la Demanderesse $\alpha$-t-elle développé un test spécifique et un appareillage spécifique permettant de soumettre à une contrainte d'écrasement à chaud un ensemble d'objets de la présente invention. Cet appareillage est constitué d'une cellule d'essai spécifique et d'une machine de traction standard. La cellule d'essai permet d'évaluer les matériaux de l'invention dans un domaine de température allant de la température ambiante à une température dépassant 250°C, et sous des pressions pouvant aller jusqu'à 250 MPa (2500 bars).

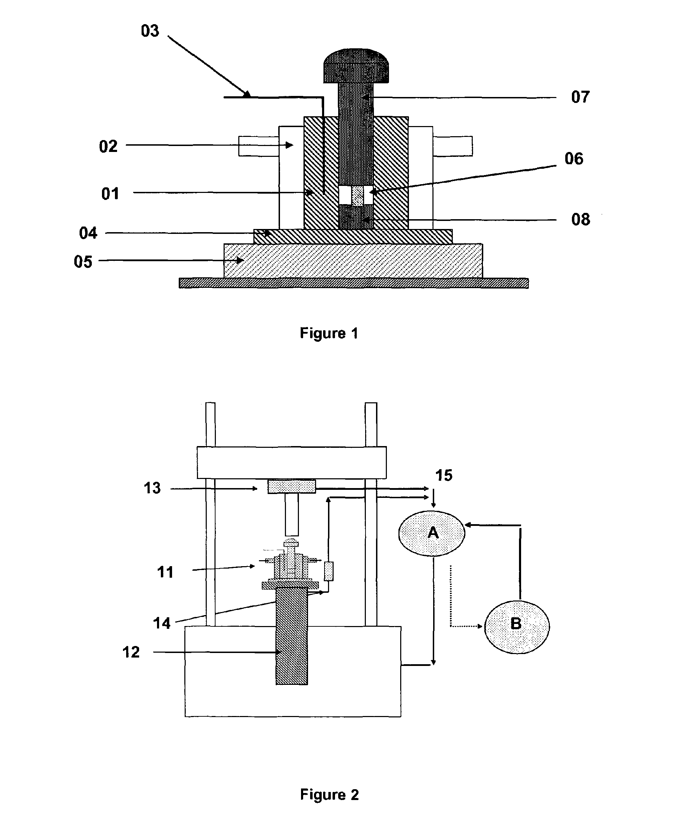

La cellule utilisée est décrite à la Figure 1, dans laquelle un cylindre en acier traité rectifié de forte épaisseur 01 repose sur une plaque en acier 04. Le chauffage de la cellule est assuré par une circulation d'huile 02, et la température est mesurée par une sonde Pt 100 03. L'ensemble est positionné sur une base en acier 05, dotée d'un insert pour l'isolation thermique (non représenté). L'échantillon 06 est placé sur un contre-piston en acier rectifié traité 08. L'effort est appliqué à l'échantillon par un cylindre acier 07 de diamètre 15 mm en acier traité rectifié.

La cellule est placée sur le vérin d'une machine de traction asservie en boucle fermée (Schenck-Trebel RMC 100), comme indiquée sur la Figure 2. La force appliquée est mesurée par une cellule de force de classe 0,1 (60 kN) 13, et le déplacement du piston 12 est suivi par un capteur de déplacement LVDT +/- 10 mm de classe 0,1 (Linear Displacement Transducer) 14. Les signaux « Force » et « Déplacement » sont récupérés 15 pour l'acquisition et le pilotage de la machine (A : régulateur boucle fermée PID / B : générateur fonction et acquisition).

Préalablement aux évaluations des matériaux, un essai est réalisé à la température du test (110°C), sans échantillon, afin de déterminer la déformation du montage. On mesure ainsi une courbe $Z_m = f(P)$, où $Z_m$ est le déplacement donné par le capteur de déplacement et P la force appliquée. Lors d'un essai sur matériau, le déplacement mesuré est : $Z = f(P)$. On calcule alors le déplacement réel $Z_c$, moyennant une correction due à la déformation du montage, selon l'équation :

$$Z_c = Z - Z_m, \text{ pour chaque valeur de la force P.}$$

Les essais sont tous réalisés à température constante, afin d'éviter tout problème lié aux effets de dilatation thermique.

Un échantillon est introduit dans la cellule à température ambiante, puis une pré-contrainte est appliquée (typiquement 10 N). La cellule est alors mise en température, la pré-contrainte étant maintenue constante via la boucle d'asservissement force de la machine.

Les essais d'écrasement sont réalisés en asservissement force sur éprouvettes parallélépipédiques de hauteur 4 mm ($h_o$) et de section 3,5 mm x 3,5 mm ($s_o$).

La déformation $\varepsilon$ est définie par le rapport entre le déplacement corrigé $Z_c$ et la hauteur ho de l'échantillon

avant écrasement : $\varepsilon = Z_c/h_o$.

Une contrainte apparente peut être calculée selon l'équation $\sigma = P/s_o$, où $s_o$ est la surface de l'échantillon avant écrasement. Cette contrainte correspond à la contrainte réelle tant que le comportement du matériau est linéaire élastique. À haute température, la déformation plastique se produit assez rapidement, ce qui conduit à une forte variation de la surface de l'échantillon et donc de la contrainte réelle qui devient différente de la contrainte apparente.

Le seuil $\sigma_y$ est défini à partir de l'écart à la linéarité sur la courbe Force = f(déformation) à la température d'essai (110°C), selon la norme ISO 604.

Il a maintenant été découvert que le matériau de la présente invention, présenté sous forme d'éprouvette de section 3,5 mm x 3,5 mm de section et de 4 mm de hauteur, placée sous contrainte d'écrasement avec une force de 0,9 kN répartie de manière uniforme sur toute la section de ladite éprouvette :

- présente une déformation $\varepsilon_{0,9}$ à 110°C inférieure à 40%, de préférence inférieure à 35%, de préférence encore inférieure à 30%, avantageusement inférieure à 25%, et même inférieure à 20%, voire inférieure à 10% dans certains cas ; et

- un seuil d'écoulement $\sigma_y$ supérieur à 6 MPa, de préférence supérieur à 8 MPa, avantageusement supérieur à 10 MPa.

Un autre test est possible pour mesurer les performances des matériaux selon l'invention. Une masse donnée d'objets selon l'invention est introduite dans la cellule à température ambiante, puis une pré-contrainte est appliquée (typiquement 10 N). La cellule est alors mise en température, la pré-contrainte étant maintenue constante via la boucle d'asservissement force de la machine. La porosité de départ Po (charge nulle ou précharge de 10N) est calculée selon la relation suivante :

$$Po = (Vc - Vp)/Vc$$

où Vc est le volume totale de la cellule à Po (surface de la cellule x la hauteur du lit de particules) ; et Vp est le volume occupé par l'ensemble des objets (masse/densité).

Les essais d'écrasement sont réalisés en asservissement force à 500 N/min environ, avec 4 paliers: 3653 N, 7306 N, 9742 N, et 12178 N (correspondant à des contraintes au niveau de la cellule de 3000, 6000, 8000, et 10.000 PSI). La durée des paliers est de 40 minutes environ. Le déplacement Z est mesuré continuement, en fonction du temps.

La hauteur résiduelle $\varepsilon$ est définie par la différence entre la hauteur initiale du lit de particules et le déplacement corrigé Zc. Le volume résiduel Vr est définit comme étant la surface de la cellule multiplié par la hauteur résiduelle.

La porosité résiduelle P est calculée selon la relation : P = (Vr-Vp)/Vo où Vo est la surface de la cellule multipliée par la hauteur du lit de particules à P initiale (Po), Vp le volume occupé par les particules, et Vr la surface de la cellule multiplié par la hauteur résiduelle $\varepsilon$ à la pression correspondante. Les données sont présentées sous la forme Porosité = fonction de la Pression appliquée sur la cellule (à la température de l'essai).

Il a maintenant été découvert que les produits selon la présente invention, sous forme de billes de diamètre compris entre 0,25 et 3 mm répartie de manière uniforme sur toute la section de ladite cellule de mesure pour une concentration comprise entre 0,02 lb/ft2 (9,76 mg/cm$^2$) et 0,15 lb/ft2 (0,07 g/cm$^2$), permettent d'obtenir une porosité résiduelle P supérieure à 15% sous une pression de 10.000 PSI à 110°C. Des produits présentant une telle résistance à l'écrasement à haute température permettent d'envisager des utilisations dans de nombreux domaines, en particulier là où sont nécessaires de produits soumis à de très fortes contraintes d'écrasement, dans des milieux où la température est élevée, à tout le moins bien supérieure à la température ambiante, sans toutefois présenter de déformations importantes et ce pour une densité contrôlée.

Il convient de noter que les matériaux selon la présente invention sont des matériaux viscoplastiques, c'est-à-dire qu'ils ne présentent ni de rupture, ni d'écaillage, lorsqu'ils sont soumis à la compression, notamment aux contraintes et températures élevées définies plus haut.

Ainsi, et selon un autre objet, la présente invention concerne l'utilisation du matériau tel que défini précédemment sous la forme de particules calibrées, par exemple sensiblement sphériques ou ellipsoïdales ou sensiblement sous forme de cylindres, de diamètre compris entre 0,1 mm et 3 mm, de préférence entre 0,3 mm et 2 mm, dans les techniques de fracturation de puits de forage, notamment de pétrole brut ou de gaz naturel.

Comme indiqué précédemment, de telles particules calibrées de faibles dimensions utilisées dans les techniques de fracturation de puits de forage (communément dénommées « proppants » en langue anglaise) sont introduites au niveau des fractures, et vont rester en place à la fin du procédé de fracturation. Ces particules vont alors maintenir une certaine ouverture des fissures, facilitant ainsi un écoulement de l'hydrocarbure.

Les performances d'usage de ces proppants sont essentiellement de bonnes propriétés mécaniques, notamment une grande résistance à l'écrasement, et une stabilité chimique dans des conditions d'utilisation typiquement de 50°C à 175°C pour une pression de 12,5 MPa (125 bars) à 100 MPa (1000 bars). L'environnement est généralement un mélange d'eau salée et d'hydrocarbures.

Ainsi, l'invention a également pour objet un procédé de fracturation d'un puits mettant en oeuvre au moins un matériau de l'invention, de préférence le matériau tel qu'il vient d'être défini, sous forme de particules calibrées, par exemple sensiblement sphériques ou ellipsoïdales ou sensiblement sous forme de cylindres, de diamètre compris entre 0,1 mm et 3 mm, de préférence entre 0,3 mm et 2 mm.

Le procédé de fracturation selon l'invention se caractérise par le pompage d'un fluide de la surface terrestre vers un réservoir souterrain, contenant notamment du pétrole brut ou du gaz naturel, à une pression et un débit suffisamment élevé pour entraîner la formation de fissures ou fractures. Afin de maintenir les fractures ouvertes, le matériau selon l'invention, avantageusement sous forme de particules calibrées telles que définies plus haut, est mélangé audit fluide et injecté dans le réservoir souterrain pour remplir la fracture souterraine, et assurer ainsi un étayage dudit réservoir.

Selon un autre aspect, le matériau de l'invention, notamment lorsqu'il est utilisé comme proppant sous forme de billes, ellipses et/ou cylindre, et du fait de sa faible déformation sous contrainte d'écrasement dans les fractures permet un bon écoulement des fluides à extraire des réservoirs souterrains.

Les particules calibrées du matériau agissant comme étai (« proppant ») maintiennent ouvert un passage perméable, au travers duquel le pétrole brut ou le gaz naturel peuvent s'écouler vers le (ou les)puits de forage, augmentant ainsi l'accès à la totalité du réservoir. La conductivité de la fracture est une donnée critique : elle est fonction de la perméabilité du lit de particules et de l'épaisseur de ce lit.

La quantité de matériau de l'invention utilisé comme proppant lors d'une fracturation peut varier dans de grandes proportions, et est généralement comprise entre quelques tonnes, voire quelques dizaines de tonnes, à plusieurs centaines de tonnes, par exemple 50 tonnes et 200 tonnes.

Selon encore un autre aspect, le matériau de l'invention peut également être utilisé en tant que filtre (« gravel pack » en langue anglaise). À cet effet, le matériau de l'invention, avantageusement sous forme de particules calibrées telles que définies plus haut, est introduit par pompage dans le réservoir souterrain pour agir selon un mécanisme de filtration, afin de minimiser l'écoulement de particules fines de roche, sable, et autres impuretés susceptibles d'être présentes dans le réservoir, dans les boues, liquides et gaz devant être extraits du puits. Une telle opération de « gravel packing » requiert de quelques milliers de kg à quelques dizaines de milliers de kg, par exemple environ 5 tonnes à environ 10 tonnes de matériau selon l'invention.

La présente invention concerne également un puits de forage comprenant au moins un matériau tel qu'il a été défini précédemment.

Le matériau selon la présente invention pourra être conditionné de nombreuses manières différentes, sous forme solide ou en suspension, en fonction de la quantité utilisée, du mode de transport, de stockage, et autres.

Avantageusement, le matériau de l'invention est conditionné en sac d'environ 1000 kg.

Des exemples de réalisation de matériaux selon la présente invention, ainsi que des résultats de tests de résistance à l'écrasement des dits matériaux sont présentés ci-après, et ont pour but d'illustrer l'invention, sans toutefois y apporter une quelconque limitation.

## PARTIE EXPERIMENTALE

### Définition des matières premières

Les exemples qui suivent présentent différents matériaux préparés à partir d'une matrice polymère type polyamide 6.6 (Technyl® 26AE1, commercialisé par Rhodia), dans laquelle différentes charges ont été introduites.

Ces charges sont caractérisées par leur densité et leur granulométrie moyenne ($D_{50}$), comme indiqué dans le Tableau 1 suivant :

<u>Tableau 1</u>

|  | *Origine* | *Grade* | *Densité* | *Taille ($D_{50}$) $\mu m$* |
|---|---|---|---|---|
| Kaolin | Imerys | Polarite 102A | 2,7 | 2 |
| Mica | CMMP | MU247 | 2,85 | 60 |
| Wollastonite | Nyco | M3 | 2,7 | 2,5 |
| Silice précipitée* | Rhodia | Z1165MP | 2,2 | ** |
| Silicate de calcium anhydre (micro-ciment) | Dickerhoff | Mikrodur RU | 2,9 | 3,5 |

(suite)

| | Origine | Grade | Densité | Taille (D$_{50}$) $\mu$m |
|---|---|---|---|---|
| Billes de verre soufflé | 3M | S 60 HS | 0,6 | 30 |

\* : Un agent de couplage charge-matrice de type silane a éventuellement été utilisé avec la silice précipitée : aminopropyltriéthoxysilane (Silquest A 1101). Le dosage est typiquement 1 % en poids de silane par rapport à la charge.

\*\* : la silice est sous forme de billes sensiblement sphériques (granulométrie moyenne d'environ 250 $\mu$m)

**Préparation des matériaux**

**1.- Incorporation des charges dans le polymère**

Les différentes charges considérées ont été incorporées dans le polyamide à l'aide d'un malaxeur interne de laboratoire de capacité 15 mL type Microcompounder (DSM MIDI 2000) sous balayage azote.

Le mélange est effectué via 2 vis coniques avec recirculation du produit dans la chambre interne à une vitesse de 150 tr/min.

La consigne de température du malaxeur est fixée à 285 °C. Le malaxage en recirculation interne est poursuivi jusqu'à obtention d'un mélange homogène (environ 5 minutes), le produit est extrudé hors du malaxeur.

**2.- Réalisation de pièces injectées**

Le mélange est alors récupéré et introduit dans une mini-presse à injecter (DSM). L'injection est réalisée avec une température piston de 290°C pour une température de moule de 100°C.

Les pièces obtenues sont des barreaux parallélépipédiques de dimensions 63 x 13 x 4 mm.

**Caractérisation des matériaux**

**1.- Réalisation des éprouvettes**

Les barreaux de 63 x 13 x 4 mm sont découpés à l'aide d'une scie diamantée à basse vitesse (Struers) afin d'obtenir des échantillons parallélépipédiques de dimensions 3,5 x 3,5 x 4 mm avec des faces parallèles et un bon état de surface. Ils sont ensuite maintenus pendant environ 8 heures à température ambiante (23°C) sous une humidité relative de 50%. La densité est mesurée selon le protocole décrit précédemment.

**2.- Caractérisation mécanique (essai compression sur cube 3,5x3,5x4 mm)**

Les échantillons sont évalués en résistance à l'écrasement à l'aide de la cellule d'essai et de la machine de traction décrits précédemment et présentés aux Figures 1 et 2. Le taux d'humidité relative est de 50% à température ambiante, avant mise en température d'essai.

Une fois l'échantillon introduit, la cellule est mise à la température d'essai (110°C). La température de l'huile est maintenue à la température souhaitée par un thermocryostat (Lauda Proline RP845). L'huile utilisée est une huile silicone (Rhodorsil 550).

Après 1 heure de palier à la température désirée sous précharge (10 N), les essais sont réalisés. Les courbes Force = f(déplacement) sont enregistrées, et la correction est effectuée afin d'avoir le déplacement corrigé de l'échantillon : $Z_c$ = f(P).

Le module élastique apparent E est calculé dans le domaine élastique. On peut également avoir une estimation du seuil d'écoulement apparent $\sigma_y$ (« yield stress » en langue anglaise), exprimé en MPa, calculé selon la norme ISO 604, c'est-à-dire la contrainte correspondant à l'écart à la linéarité (ou bien la contrainte correspondant à une déformation $\varepsilon$ de 0,1%).

Un niveau de chargement caractéristique a été défini : il correspond à une pression appliquée de 735 bars (73,5 MPa). La force correspondante tel que définie dans le test décrit précédemment est de 0,9 kN. Pour ce niveau de chargement à 110°C, on calcule les déformations $\varepsilon_{0,9}$ des différents échantillons.

Les essais d'écrasement sont réalisés en asservissement force à 0,5 N/s sur éprouvettes parallélépipédiques de hauteur h$_o$ (4 mm) et de section s$_o$ (3,5 x 3,5 mm).

Les résultats sont rapportés dans le tableau 2 suivant :

### Tableau 2

| Résultats des essais d'écrasement (0,5 N/s) à 110°C sur échantillons 3,5 mm x 3,5 mm x 4 mm | | | | |
|---|---|---|---|---|
| Exemples | Densité | Rigidité ou Module apparent (GPa) | Seuil d'écoulement apparent (MPa $\pm$ 0,5 MPa) | Déformation $\varepsilon_{0,9}$ pour P = 0,9 kN (%) |
| C1/ PA 6.6 | 1,12 | 0,410 | 12 | 45 |
| C2/PA 6.6 + kaolin (20% vol.) | 1,47 | 0,450 | 11,5 | 38 |
| C3/ PA 6.6 + mica (25% vol.) | 1,53 | 0,700 | 12 | 21 |
| E1/ PA 6.6 + silice (15%) | 1,25 | 0,825 | 15 | 17 |
| C4/ PA 6.6 + mica (50%) | 1,96 | 1,600 | 16 | |
| E2/ PA 6.6 + (silice + silane) (15%) | 1,26 | 0,850 | 16,5 | 12 |
| C5/PA6.6+ microciment (50%) | 2 | 1,8 | 15,5 | 25 |
| C6/ PA 6.6 + kaolin (18%) + billes de verre (10%) | 1,2 | 0,44 | 12 | 40 |
| *Les exemples E sont représentatifs de la présente invention ; les exemples C sont représentatifs de l'art antérieur.* | | | | |

Les résultats obtenus montrent clairement que le polymère non chargé (PA 6.6) ainsi que les compositions comportant un faible taux de charge de renfort se déforment très rapidement et ce de façon non élastique à haute température (110°C), pour des niveaux de force relativement faibles (200 N à 300 N).

Pour des quantités élevées de charge de renfort, typiquement supérieures à 20% vol. dans le cas des charges de granulométrie supérieure au micromètre, le comportement du matériau est profondément modifié avec un domaine élastique devenant plus important.

Des résultats sont obtenus avec le matériau à base de polyamide 6.6 comprenant 50% vol. de mica, ou encore 50% vol. de micro-ciment.Certaines charges sub-microniques conduisent à des comportements très intéressants, sous réserve de disperser correctement ces charges. Ainsi avec 15% vol. de silice précipitée, on obtient un comportement similaire à celui obtenu avec 50% de micro-ciment.

**Préparation des matériaux**

Pour l'introduction de silice précipitée dans le polyamide, on réalise d'abord un mélange maître, qui est ensuite repris en formulation par dilution. Ceci permet d'obtenir une bonne qualité de désagglomération/dispersion des dites charges. Le mélange maître a été réalisé à partir de polymère PA 6.6 Technyl 26AE1 sous forme de granulés standard et de silice précipitée à un taux correspondant à 30% poids (19% volume) à l'aide d'une extrudeuse bi-vis équipée d'une coupe en tête noyée, avec un profil cisaillant.

Le mélange maître, sous forme de granulés grossiers d'environ 5 à 10 mm est repris en formulation. Une dilution est effectuée par ajout de polymère PA 6.6 Technyl 26AE1 sous forme de granulés afin d'obtenir un taux final de 20% poids (12% volume) de silice précipitée. Le mélange maître et les granulés de polyamide sont introduits en entrée d'extrudeuse bi-vis équipée d'une coupe en tête noyée, avec un profil cisaillant. Le dispositif de coupe en tête noyée permet d'obtenir à partir du mélange fondu des billes de morphologie sphérique présentant un diamètre moyen de 1,5 mm.

Un deuxième essai a été réalisé dans les conditions décrites ci-dessus, avec un ajout d'agent de couplage (chloropropyltrimethoxysilane). Le silane liquide est imprégné sur le mélange maître par simple malaxage dans un mélangeur fermé avant l'étape de dilution. La teneur utilisée dans l'exemple est de 4% poids par rapport à la silice précipitée. Le dispositif de coupe en tête noyée permet d'obtenir à partir du mélange fondu des billes de morphologie sphérique présentant un diamètre moyen de 1,5 mm.

**Caractérisation des produits**

**1.- Mesure de densité**

Les billes obtenues par la coupe en tête noyée sont séchées à 40°C en étuve. La densité est mesurée selon le protocole décrit précédemment.

**2.- Caractérisation mécanique (écrasement d'un lit de particules)**

Les échantillons sont évalués en résistance à l'écrasement à l'aide de la cellule d'essai et de la machine de traction décrits précédemment et présentés aux Figures 1 et 2. Le taux d'humidité relative est de 50% à température ambiante, avant mise en température d'essai. La quantité de produit est fixée à 0,04 lb/ft2 (0,0195 g/cm2).
Une fois les produits introduits, la cellule est mise à la température d'essai de 110°C. La température de l'huile est maintenue à la température souhaitée par un thermocryostat (Lauda Proline RP845). L'huile utilisée est une huile silicone (Rhodorsil 550).
Après 1 heure de palier à la température désirée sous précharge (10 N), les essais sont réalisés. Les courbes Force = f(déplacement) sont enregistrées, et la correction est effectuée afin d'avoir le déplacement corrigé de l'échantillon : $Z_c$ = f(P).
La porosité résiduelle Pr est calculée pour chaque plateau : 0, 3000, 6000, 8000, et 10.000 PSI (respectivement 0, 207, 413, 551 et 690 bars).
Les résultats sont rapportés dans le tableau 3 suivant :

**Tableau 3**

| Résultats des essais d'écrasement à 110°C sur billes à 0,04 lb/ft2 | | | | | | |
|---|---|---|---|---|---|---|
| | | Porosité en fonction de la pression de le cellule (%) | | | | |
| | Densité | 0 | 3000 PSI | 6000 PSI | 8000 PSI | 10000 PSI |
| C7/PA 66 | 1,12 | 0,94 | 0,35 | 0,26 | 0,15 | 0,11 |
| C8/PA66 + 40% wt kaolin | 1,47 | 0,95 | 0,39 | 0,26 | 0,21 | 0,19 |
| E3/PA66 + 20 %wt silice | 1,26 | 0,93 | 0,36 | 0,23 | 0,18 | 0,15 |
| E4/PA66 + 20 %wt silice + 2%wt agent de couplage | 1,26 | 0,9 | 0,42 | 0,3 | 0,26 | 0,22 |
| *Les exemples E sont représentatifs de la présente invention ; les exemples C sont représentatifs de l'art antérieur.* | | | | | | |

Les résultats obtenus montrent clairement que le polyamide 66 non chargé présente une faible densité, inférieure à 1,35, mais par contre une faible porosité résiduelle Pr à 10.000 PSI sous 110°C. Pour des quantités élevées de charge de renfort, typiquement supérieures à 20% vol. dans le cas des charges classiquement utilisées, le comportement du matériau est profondément modifié. La porosité résiduelle Pr à 10.000 PSI sous 110°C est supérieure à 0,15, mais ceci au détriment de la densité, supérieure à 1,35.
Au contraire, l'utilisation de silice précipitée permet d'obtenir un très bon compromis faible densité et de tenue à l'écrasement. Ainsi avec 20% en poids de silice précipitée, on obtient une porosité résiduelle Pr à 10.000 PSI sous 110°C supérieure à 0,15 tout en maintenant la densité en dessous de 1,26.

**Revendications**

1.   Utilisation d'un matériau comprenant au moins une matrice polymère thermoplastique dans laquelle est dispersée au moins une charge de renfort de type silice précipitée, pour le domaine de l'extraction d'hydrocarbures.

2.   Utilisation de charges de renfort de type silice précipitée pour accroître les propriétés mécaniques d'une matrice polymère thermoplastique pour la réalisation d'un matériau utilisé pour le domaine de l'extraction d'hydrocarbures.

3. Utilisation selon la revendication 1 ou 2, dans laquelle le matériau comprenant au moins une matrice polymère thermoplastique dans laquelle est dispersée au moins une charge de renfort de type silice précipitée, **caractérisée en ce qu'**une éprouvette parallélépipédique de section 3,5 mm x 3,5 mm de section et de 4 mm de hauteur, obtenue par injection dudit matériau, et placée sous contrainte d'écrasement avec une force de 0,9 kN répartie sur la totalité de la surface de 3,5 mm x 3,5 mm de ladite éprouvette :

   • présente une déformation $\varepsilon_{0,9}$ à 110°C inférieure ou égale à 40%; et
   • un seuil d'écoulement $\sigma_y$ à 110°C supérieur à 6 MPa.

4. Utilisation selon l'une quelconque des revendications 1 à 3, **caractérisée en ce que** le matériau présente une densité inférieure ou égale à 2,5.

5. Utilisation selon l'une quelconque des revendications 1 à 4, dans lequel le polymère thermoplastique présente une masse molaire Mn supérieure à 10 000.

6. Utilisation selon l'une quelconque des revendications 1 à 5, dans laquelle le polymère thermoplastique est choisi parmi les polyamides, les polyesters, et les polyoléfines.

7. Utilisation selon l'une quelconque des revendications 1 à 6, dans laquelle le polymère thermoplastique est choisi parmi les polyamides 6, polyamides 6.6, polyamides 11, polyamides 12, copolyamides 66/6, copolyamides 6/66, copolyamides comprenant au moins 80% en poids de motifs polyamide 6, ou au moins 80% en poids de copolyamide 66, polyamides semi-aromatiques, polyamides T6 et polyamides 4,6.

8. Utilisation selon l'une quelconque des revendications 1 à 7, dans laquelle la silice précipitée est une silice amorphe préparée par réaction de précipitation d'un silicate avec un agent acidifiant, avec obtention d'une suspension de silice précipitée, puis, habituellement, séparation, en particulier par filtration, avec obtention d'un gâteau de filtration, de la silice précipitée obtenue et enfin séchage.

9. Utilisation selon l'une quelconque des revendications 1 à 8, dans laquelle la silice précipitée est une silice hautement dispersible (HDS).

10. Utilisation selon l'une quelconque des revendications 1 à 9, dans laquelle la silice précipitée se présente sous forme de billes sensiblement sphériques, de granulés ou de poudre.

11. Utilisation selon l'une quelconque des revendications 1 à 9, dans laquelle la silice précipitée est dispersée dans la matrice polymère thermoplastique et se retrouve, au moins 70 % en volume par rapport au volume total de silice précipitée, sous forme de particules submicroniques dispersées de granulométrie moyenne ($D_{50}$) comprise entre 10 et 1000 nm.

12. Utilisation selon l'une quelconque des revendications 1 à 11, **caractérisée en ce que** la quantité de silice précipitée présente dans ledit matériau est comprise entre 1% et 25% volumique.

13. Utilisation selon l'une quelconque des revendications 1 à 12, comprenant en outre un ou plusieurs agents de couplage susceptibles d'assurer une certaine cohésion entre la charge et la matrice.

14. Utilisation selon l'une quelconque des revendications 1 à 13, **caractérisée en ce que** le matériau se présente sous forme de granulés, copeaux, billes, lingots, de toutes formes, sphériques, aplaties, ovoïdes, eu forme de goutte, de prisme, de parallélépipède, de cylindres, ou de coussinets.

15. Utilisation selon l'une quelconque des revendications 1 à 14, **caractérisée en ce que** le matériau se présente sous forme de particules calibrées, sensiblement sphériques ou ellipsoïdales ou sensiblement sous forme de cylindres, de diamètre compris entre 0,1 mm et 3 mm.

16. Utilisation du matériau selon l'une quelconque des revendications 1 à 15 dans les techniques de fracturation de puits de forage.

17. Procédé de fracturation d'un puits de forage, **caractérisé en ce qu'**il met en oeuvre au moins un matériau selon l'une quelconque des revendications 1 à 16.

**18.** Puits de forage comprenant au moins un matériau selon l'une quelconque des revendications 1 à 14.


**Claims**

**1.** Use of a material comprising at least one thermoplastic polymer matrix in which at least one reinforcing filler of the precipitated silica type is dispersed, for the field of the extraction of oil and gas.

**2.** Use of reinforcing fillers of the precipitated silica type to improve the mechanical properties of a thermoplastic polymer matrix for the preparation of a material used in the field of the extraction of oil and gas.

**3.** Use according to either of Claims 1 and 2, in which the material comprising at least one thermoplastic polymer matrix in which at least one reinforcing filler of the precipitated silica type is dispersed, **characterized in that** a parallelepipedic test specimen having a cross section of 3.5 mm $\times$ 3.5 mm and a height of 4 mm, obtained by injection of said material, and placed under crushing stress with a force of 0.9 kN distributed over the whole area of 3.5 mm $\times$ 3.5 mm of said specimen:

- has a deformation $\varepsilon_{0.9}$ at 110°C lower than or equal to 40%; and
- a yield stress $\sigma_y$ at 110°C higher than 6 MPa.

**4.** Use according to any one of Claims 1 to 3, **characterized in that** the material has a specific gravity lower than or equal to 2.5.

**5.** Use according to any one of Claims 1 to 4, **characterized in that** the thermoplastic polymer has a molecular weight Mn higher than 10 000.

**6.** Use according to any one of Claims 1 to 5, **characterized in that** the thermoplastic polymer is selected from polyamides, polyesters and polyolefins.

**7.** Use according to any one of Claims 1 to 6, **characterized in that** the thermoplastic polymer is selected from polyamides 6, polyamides 6.6, polyamides 11, polyamides 12, copolyamides 66/6, copolyamides 6/66, copolyamides comprising at least 80% by weight of polyamide 6 motifs, or at least 80% by weight of copolyamide 66, semi-aromatic polyamides T6 and polyamides 4.6.

**8.** Use according to any one of Claims 1 to 7, **characterized in that** the precipitated silica is an amorphous silica prepared by the precipitation of a silicate with an acidizer, with the production of a suspension of precipitated silica, and then, usually, separation, in particular by filtration, with the production of a filter cake, of the precipitated silica obtained, and finally drying.

**9.** Use according to any one of Claims 1 to 8, **characterized in that** the precipitated silica is a highly dispersible silica (HDS).

**10.** Use according to any one of Claims 1 to 9, **characterized in that** the precipitated silica is in the form of substantially spherical pellets, granules or powder.

**11.** Use according to any one of Claims 1 to 9, **characterized in that** the precipitated silica is dispersed in the thermoplastic polymer matrix and is present, for at least 70% by volume of the total volume of the precipitated silica, in the form of dispersed submicron-sized particles having a mean grain size ($D_{50}$) between 10 and 1000 nm.

**12.** Use according to any one of Claims 1 to 11, **characterized in that** the quantity of precipitated silica present in said material is between 1 and 25 volume %.

**13.** Use according to any one of Claims 1 to 12, further comprising one or more coupling agents for providing a degree of cohesion between the filler and the matrix.

**14.** Use according to any one of Claims 1 to 13, **characterized in that** the material is in the form of granules, chips, pellets, ingots, of all shapes, spherical, flat, ovoid, in the form of drops, prisms, parallelepipeds, cylinders or pads.

**15.** Use according to any one of Claims 1 to 14, **characterized in that** the material is in the form of calibrated particles, substantially spherical or ellipsoidal or substantially in the form of cylinders, having a diameter between 0.1 mm and 3 mm.

**16.** Use of the material according to any one of Claims 1 to 15, in techniques of fracturing of drilling wells in particular of crude oil or natural gas.

**17.** Method for fracturing a drilling well, **characterized in that** it uses at least one material according to any one of Claims 1 to 16.

**18.** Drilling well comprising at least one material according to any one of Claims 1 to 14.

**Patentansprüche**

**1.** Verwendung eines Materials mit mindestens einer thermoplastischen Polymermatrix, in der mindestens ein verstärkender Füllstoff vom Fällungskieselsäure-Typ dispergiert ist, zur Extraktion von Kohlenwasserstoffen.

**2.** Verwendung von verstärkenden Füllstoffen vom Fällungskieselsäure-Typ zur Verbesserung der mechanischen Eigenschaften einer thermoplastischen Polymermatrix zur Herstellung eines Materials, das auf dem Gebiet der Extraktion von Kohlenwasserstoffen verwendet wird.

**3.** Verwendung nach Anspruch 1 oder 2, wobei das Material, das mindestens eine thermoplastische Polymermatrix, in der mindestens ein verstärkender Füllstoff vom Fällungskieselsäure-Typ dispergiert ist, umfaßt, **dadurch gekennzeichnet, daß** eine parallelepipedische Probe mit einem Querschnitt von 3,5 mm x 3,5 mm und einer Höhe von 4 mm, erhalten durch Injektion des Materials und mit einer über die gesamte Oberfläche von 3,5 mm x 3,5 mm der Probe verteilte Kraft von 0,9 kN unter Druckbelastung gesetzt:

- eine Verformung $\varepsilon_{0,9}$ bei 110°C kleiner gleich 40% und
- eine Fließgrenze $\sigma_y$ bei 110°C von mehr als 6 MPa aufweist.

**4.** Verwendung nach einem der Ansprüche 1 bis 3, **dadurch gekennzeichnet, daß** das Material eine Dichte kleiner gleich 2,5 aufweist.

**5.** Verwendung nach einem der Ansprüche 1 bis 4, wobei das thermoplastische Polymer eine Molmasse Mn größer 10.000 aufweist.

**6.** Verwendung nach einem der Ansprüche 1 bis 5, wobei das thermoplastische Polymer unter Polyamiden, Polyestern und Polyolefinen ausgewählt ist.

**7.** Verwendung nach einem der Ansprüche 1 bis 6, wobei das thermoplastische Polymer unter Polyamid-6, Polyamid-6.6, Polyamid-11, Polyamid-12, Copolyamid-66/6, Copolyamid-6/66, Copolyamiden mit mindestens 80 Gew.-% Polyamid-6-Einheiten oder mindestens 80 Gew.-% Copolyamid-66, teilaromatischen Polyamiden, Polyamid-T6 und Polyamid-4,6 ausgewählt ist.

**8.** Verwendung nach einem der Ansprüche 1 bis 7, wobei es sich bei der Fällungskieselsäure um eine durch Fällungsreaktion eines Silikats mit einem Ansäuerungsmittel unter Erhalt einer Fällungskieselsäuresuspension, gewöhnlich mit nachfolgender Abtrennung, insbesondere durch Filtration, unter Erhalt eines Filterkuchens der erhaltenen Fällungskieselsäure und schließlich Trocknung hergestellte amorphe Kieselsäure handelt.

**9.** Verwendung nach einem der Ansprüche 1 bis 8, wobei es sich bei der Fällungskieselsäure um eine hochdispersible Kieselsäure (HDS) handelt.

**10.** Verwendung nach einem der Ansprüche 1 bis 9, wobei die Kieselsäure in Form von weitgehend sphärischen Kügelchen, Granulat oder Pulver vorliegt.

**11.** Verwendung nach einem der Ansprüche 1 bis 9, wobei die Kieselsäure in der thermoplastischen Polymermatrix dispergiert ist und zu mindestens 70 Vol.-%, bezogen auf das Gesamtvolumen der Fällungskieselsäure, in Form von dispergierten Submikronteilchen mit einer mittleren Teilchengröße ($D_{50}$) zwischen 10 und 1000 nm vorliegt.

**12.** Verwendung nach einem der Ansprüche 1 bis 11, **dadurch gekennzeichnet, daß** die in dem Material vorliegende Fällungskieselsäuremenge zwischen 1 und 25 Vol.-% liegt.

**13.** Verwendung nach einem der Ansprüche 1 bis 12, die außerdem ein oder mehrere Haftvermittler zur Gewährleistung einer bestimmten Kohäsion zwischen dem Füllstoff und der Matrix umfaßt.

**14.** Verwendung nach einem der Ansprüche 1 bis 13, **dadurch gekennzeichnet, daß** das Material in Form von Granulat, Schnitzeln, Kügelchen, Blöcken jeglicher Form, kugelförmig, abgeflacht, oval, in Tropfen-, Prismen-, Parallelepiped-, Zylinder-oder Kissenform vorliegt.

**15.** Verwendung nach einem der Ansprüche 1 bis 14, **dadurch gekennzeichnet, daß** das Material in Form von kalibrierten, weitgehend kugelförmigen oder ellipsoiden oder weitgehend in Form von Zylindern vorliegenden Teilchen mit einem Durchmesser zwischen 0,1 mm und 3 mm vorliegt.

**16.** Verwendung nach einem der Ansprüche 1 bis 15 bei Bohrlochfrakturierungstechniken.

**17.** Verfahren zur Frakturierung eines Bohrlochs, **dadurch gekennzeichnet, daß** man mindestens ein Material nach einem der Ansprüche 1 bis 16 verwendet.

**18.** Bohrloch, umfassend mindestens ein Material nach einem der Ansprüche 1 bis 14.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006072704 A
- US 3659651 A
- EP 0520862 A
- EP 0670813 A
- EP 0670814 A
- EP 0966207 A
- US 2918701 A
- US 3749539 A
- US 20050035483 A